# EUROPÄISCHE PATENTSCHRIFT

(11) **EP 0 512 368 B1**
(45) Veröffentlichungstag und Bekanntmachung des Hinweises auf die Patenterteilung: **26.06.1996**
(21) Anmeldenummer: 92107229.4
(22) Anmeldetag: 28.04.1992
(51) Int. Cl.: G01N 21/03

(54) **Küvette zur Durchführung optischer Messungen**
Cuvette for performing optical measurements
Cuvette pour mesurage optique

(30) Priorität: 07.05.1991 CH 1368/91
(43) Veröffentlichungstag der Anmeldung: 11.11.1992
(73) Patentinhaber: F. HOFFMANN-LA ROCHE AG, CH-4002 Basel (CH)
(72) Erfinder: Balmer, Alfons, CH-6312 Steinhausen (CH)
(74) Vertreter: Ventocilla, Abraham

(56) Entgegenhaltungen:
- EP-A- 0 152 964
- WO-A-90/05903
- CH-A- 493 834
- US-A- 4 263 256

## Beschreibung

Die Erfindung betrifft eine Küvette zur Durchführung optischer Messungen in einem automatischen Analysengerät, und insbesondere eine Einzelküvette für ein Analysengerät für klinisch chemische Analysen, welche Küvette
ein aus einem lichtdurchlässigen Kunststoff in einem Stück geformten Teil ist,
einen länglichen Körper hat, der an einem Ende offen und am entgegengesetzten Ende durch einen Boden geschlossen ist,
am offenen Ende des Körpers zwei Zungen hat, die sich vom Rand des offenen Endes nach aussen, senkrecht zur Längsachse der Küvette erstrecken, wobei jede Zunge eine Vertiefung besitzt, und wobei die Zungen und ihre Vertiefungen in bezug auf die Längsachse der Küvette zueinander symmetrisch sind.

Im Analysengerät werden solche Küvetten üblicherweise mit Proben und Reagenzien beschickt und eine elektro-optische Ar alyse des in der Küvette enthaltenen Probe-Reagenz-Gemisches durchgeführt.

Bekannt sind Analysengeräte, bei denen einzelne Reaktions- bzw. Messküvetten verwendet werden, wobei die Küvetten durch eine mechanische, automatisch gesteuerte Transportvorrichtung auf einem passenden Träger im Analysengerät eingesetzt und nach Gebrauch daraus entnommen werden. Bei diesen Analysengeräten bleibt jede Küvette über die ganze Dauer des Analyseverfahrens auf dem Küvettenträger. Der Transport jeder Küvette zum Küvettenträger bzw. deren Entnahme vom Träger erfolgt daher nur einmal. Das Risiko, dass eine Küvette beim Transport verloren geht, ist deshalb relativ gering.

Bei modernen Analysengeräten, bei denen eine Hohe Zahl von Messungen pro Zeiteinheit angestrebt wird, und mit entsprechend kurzen Taktzeiten gearbeitet werden soll, ist es erwünscht, einige Schritte des Analyseverfahrens (z.B. Zugabe von Reagenzien zu einzelnen Küvetten, Durchführung von Mischbewegungen der Küvette, etc.) ausserhalb des Küvettenträgers durchzuführen, und den Küvettenträger vorwiegend zur Durchführung optischer Messungen der in den Küvetten enthaltenen Probe-Reagenz-Gemischen zu benutzen. Dafür muss der Transport jeder Küvette zum Küvettenträger bzw. deren Entnahme vom Träger mehrmals erfolgen. Das Transportsystem muss ausserdem den Transport jeder Küvette zwischen dem Küvettenträger und verschiedenen Bearbeitungsstationen ermöglichen. Hinzu kommt, dass einige Analysensysteme mit drehbaren Küvettenträger arbeiten, und dass es erwünscht sein kann, dass die Transportbewegungen der Küvetten auch bei rotierendem Küvettenträger erfolgen können. Das Risiko, dass eine Küvette bei einem derart flexiblen und mehrmaligen Transport verloren geht, ist daher entsprechend grösser.

Bei vielen Anwendungen darf der Verlust einer Küvette im Analysensystem nicht in Kauf genommen werden. Bei sonst weitgehend automatisierte Analysengeräten würde die Möglichkeit von Küvettenverluste bei deren Transport zumindest eine visuelle Ueberwachung des Küvettentransports während des Betriebs des Analysengeräts notwendig machen, was aus verschiedenen Gründen kaum in Frage kommt.

Eine Küvette der eingangs genannten Art ist aus der WO-A-90/05903 bekannt. Diese bekannte Küvette weist jedoch eine flache Bodenwand auf, und sie ist daher für die Durchführung von Fluoreszenz-Polarisationsmessungen des Küvetteninhalts ungeeignet.

Aus der EP-A-0152964 ist eine Küvettenanordnung bekannt, bei der jede Küvette einen halbzylindrischen Boden hat. Der obere Teil dieser Küvetten weisen keine symmetrischen Zungen auf, die für den Transport der Küvette mit einem Greifer geeignet sind. Die Seitenwände dieser Küvette weisen keine Stege auf, die zur Verbesserung der optischen Eigenschaften des Küvettenbodens dienen.

Aus der CH-A-493834 ist ferner eine Küvette bekannt, deren Wände Rippenpaare aufweisen, die dazu dienen, der Küvette Formbeständigkeit zu verleihen, zur Wärmeübertragung beizutragen und die Planflächen (Messfenster) der Küvette gegen Zerkratzen zu schützen. Diese Rippenpaare tragen jedoch in keiner Weise dazu bei, die optischen Eigenschaften des Küvettenbodens zu verbessern.

Der Erfindung liegt daher hauptsächlich die Aufgabe zugrunde, eine Küvette der eingangs angegebenen Art zur Verfügung zu stellen, deren Gestalt einen verlustfreien Transport der einzelnen Küvetten innerhalb des Analysengeräts ermöglicht.

Der Erfindung liegt ausserdem die Aufgabe zugrunde, eine Küvette der eingangs angegebenen Art zur Verfügung zu stellen, mit der sowohl spektralphotometrische Extinktionsmessungen wie auch Fluoreszenz-Polarisationsmessungen durchgeführt werden können.

Erfindungsgemäss wird diese Aufgabe mit einer Küvette der eingangs genannten Art gelöst, die dadurch gekennzeichnet ist, dass sie einen rohrförmigen Körper hat, der zwei planparallele Wände besitzt, die sich zwischen dem offenen Ende und dem Boden erstrecken,
e) die planparallelen Wände senkrecht zu den Zungen angeordnet sind,
f) der Boden die Form eines Halbzylinders hat,
g) der rohrförmige Körper zwei Seitenwände hat, die sich zwischen den planparallelen Wänden erstrecken, welche Seitenwände einen oberen Teil und einen unteren Teil haben, wobei der untere Teil an den Boden angrenzt, und wobei der untere, zentrale Teil jeder Seitenwand einen äusseren Steg enthält, der sich in länglicher Richtung der Küvette zwischen dem oberen Teil der Seitenwand zu einem Punkt in der Nähe des Bodens erstreckt, und
h) sie sowohl zur Durchführung von spektralphotometrischen Extinktionsmessungen als auch zur Durchführung von Fluoreszenz-Polarisationsmessungen geeignet ist.

Der wesentliche Vorteil der erfindungsgemässen Küvette gegenüber den im Stand der Technik bekannten Küvetten liegt darin, dass die bei der erfindungsgemässen Küvette vorgesehenen Zungen und die darin vorgesehenen Vertiefungen dazu geeignet sind, mit einem zu diesen passenden mechanischen Greifer der Transportvorrichtung so zusammenzuwirken, dass ein Verlust der Küvette bei deren Transport ausgeschlossen ist. Auf diese Weise ermöglicht die erfindungsgemässe Küvette eine vollautomatische, verlustfreie Durchfährung des Küvettentransports innerhalb des Analysensystems, und zwar auch dann, wenn ein mehrmaliger Transport jeder Küvette zwischen dem Küvettenträger und verschiedene Bearbeitungsstationen erforderlich ist. Nach Bedarf kann dieser Transport auch bei rotierenden Küvettenträger erfolgen. Eine Ueberwachung des Küvettentransports ist daher nicht erforderlich.

Das Vorhandenseins der Stege als Teil der Küvette macht diese sowohl Durchführung von spektralphotometrischen Messungen als auch Fluoreszenz-Polarisationsmessungen geeignet. Dadurch wird die zweitgenannte, der Erfindung zugrundeliegende Aufgabe gelöst. Die halbzylindrische Bodenform macht die Küvette zur Durchführung von Fluoreszenz-Polarisationsmessungen besonders geeignet.

Eine bevorzugte Ausführungsform des erfindungsgemässen Küvette ist dadurch gekennzeichnet, dass das Durchmesser jeder Vertiefung annähernd die Hälfte der Abmessung der Zunge in den zu den planparallelen Wänden senkrechten Richtung beträgt

Eine weitere bevorzugte Ausführungsform des erfindungsgemässen Küvette ist dadurch gekennzeichnet, dass die Tiefe jeder Vertiefung annähernd die Hälfte der Abmessung der Zunge in der zu den planparallelen Wänden parallelen Richtung beträgt.

Eine weitere bevorzugte Ausführungsform des erfindungsgemässen Küvette ist dadurch gekennzeichnet, dass bei jeder Zunge der Bereich zwischen dem offenen Ende ihrer Vertiefung und dem äusseren Rand der Zunge eine ebene Fläche enthält, die mit einer zur Längsachse der Küvette senkrechten Ebene einen Winkel von annähernd 45° bildet. Diese Ausführungsform hat den Vorteil, dass durch die besondere Ausbildung der Zungen eine zuverlässigere Zusammenwirkung der Zunge mit einem mechanischen Greifer möglich ist.

Ein Ausführungsbeispiel der Erfindung wirii im folgenden anhand der beiliegenden Zeichnungen beschrieben. Es zeigen:
- Fig. 1: eine perspektivische Ansicht einer erfindungsgemässen Kiivette,
- Fig. 2: eine erste Seitenansicht der Küvette gemäss Fig.1,
- Fig. 3: eine Draufsicht der Küvette gemäss Fig.1,
- Fig. 4: eine zweite Seitenansicht der Küvette gemäss Fig.1,
- Fig. 5: eine Druntersicht der Küvette gemäss Fig.1,

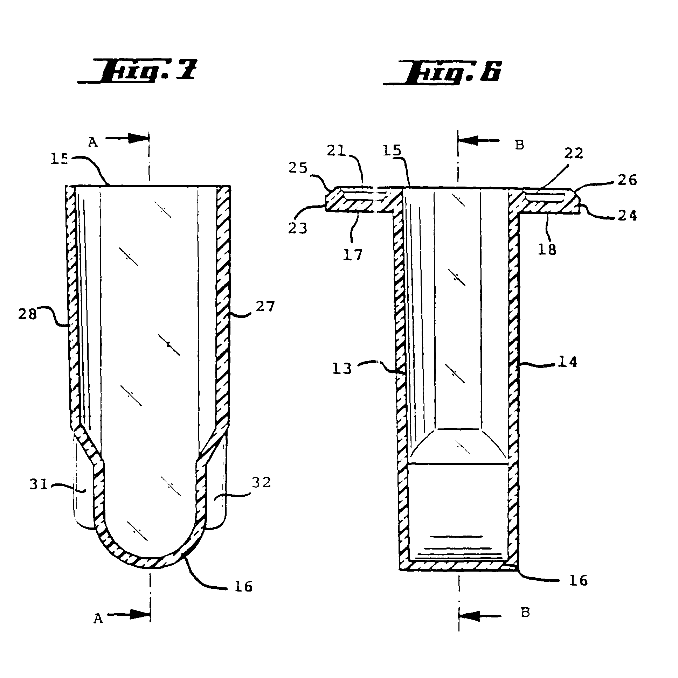

- Fig. 6: einen Querschnitt durch die Linie A-A in Figuren 3 bzw. 7,
- Fig. 7: einen Querschnitt durch die Linie B-B in Fig. 6,

Die in den beiliegenden Figuren dargestellte Küvette (11) ist ein aus einem lichtdurchlässigen Kunststoff, z.B. aus einer Polymethylmethakrilat-Spritzgussmasse, in einem Stück geformten Teil. Durch ihre nachstehend beschriebene Ausbildung ist diese Küvette zur Durchführung optischer Messungen des Küvetteninhalts geeignet.

Die Küvette 11 hat einen rohrförmigen Körper 12, der zwei planparallelen Wände 13, 14 und zwei Seitenwände 27, 28 besitzt, und der an einem Ende 15 offen und am entgegengesetzten Ende durch einen Boden 16 geschlossen ist. Bei der Durchführung optischer Messungen des Küvetteninhalts verläuft der verwendete Lichtstrahl durch die planparallelen Wände 13, 14 und senkrecht dazu.

Jede der planparallelen Wände 13, 14 hat am offenen Ende 15 des Körpers eine Zunge 17, 18, die sich vom Rand des offenen Endes 15 nach aussen erstreckt, und die senkrecht zu den planparallelen Wänden 13, 14 gerichtet ist.

Jede Zunge 17, 18 hat in ihrer Mitte eine zylindrische Vertiefung 21, 22. Die Zungen 17, 18 und ihre Vertiefungen 21, 22 sind in bezug auf die Längsachse (Y-Y) der Küvette 11 zueinander symmetrisch.

Das Durchmesser jeder der Vertiefungen 21, 22 beträgt vorzugsweise annähernd die Hälfte der Abmessung der Zunge 17 bzw. 18 in der zu den planparallelen Wänden 13, 14 senkrechten Richtung. Diese Abmessung ist die Breite der Zunge gemessen zwischen dem Rand des offenen Endes 15 des rohrförmigen Körpers 12 der Küvette und dem äussseren Rand der Zunge.

Die Tiefe jeder der Vertiefungen 21, 22 beträgt vorzugsweise annähernd die Hälfte der Abmessung der Zunge 17 bzw. 18 in der zu den planparallelen Wänden 13, 14 parallelen Richtung. Diese Abmessung ist die Dicke der Zunge.

Bei jeder Zunge 17, 18 enthält der Bereich zwischen dem offenen Ende ihrer Vertiefung 21 bzw. 22 und dem äusseren Rand 23 bzw. 24 der Zunge vorzugsweise eine ebene Fläche 25, 26, die mit einer zur Längsachse Y-Y der Küvette senkrechten Ebene einen Winkel von annähernd 45° bildet.

Durch die oben beschriebene Ausbildung der Küvette 11 ist diese bestens dazu geeignet, von einem zangenförmigen, in den Zeichnungen nicht gezeigten Greifer einer Trasportvorrichtung gefasst zu werden, der mittels eines Antriebs und einer entsprechenden Steuerung dazu eingerichtet ist, die Küvette bei einer vorbestimmten Entnahme-Position zu fassen, sie zu einer vorbestimmten Abgabeposition zu tragen und sie dort abzugeben.

Wenn die erfindungsgemässe Küvette zur Durchführung von spektralphotometrische Extinktionsmessungen eines darin enthaltenen Probe-Reagenz-Gemisches verwendet wird, verlauft der dazu verwendete Lichtstrahl durch den unteren Teil der planparallelen Wänden 13, 14, wobei dieser untere Teil an dem Boden 16 angrenzt. Der untere Bereich der planparallelen Wänden 13, 14, die als optische Messfenster benutzt werden, muss deshalb entsprechende optische Anforderungen erfüllen.

Da die erfindungsgemässe Küvette zur Durchführung ausserdem zur Durchführung von Fluoreszenz-Polarisationsmessungen verwendbar sein soll, und da bei solchen Messungen Licht gemessen wird, das die Küvette durch den Boden 16 verlässt, muss auch der Boden der Küvette entsprechende optische Anforderungen erfüllen.

Um die erwünschte Genauigkeit bei der Durchführung von Fluoreszenz-Polarisationsmessungen erreichen zu können, die Aenderung der Polarizationsrichtung, die durch die beteiligte optische Fenster (d.h. der beteiligte Portionen der planparallelen Wänden 13, 14 und des Bodens 16) verursacht wird, muss sehr klein sein. Um diese Eigenschaft zu erreichen, wird bei der Herstellung der Küvette durch Spritzgiessen die Position des Angusses am obersten Rand der Küvette gewählt, d.h. möglichst weitvom unteren Teil der Küvette entfernt, wo sich die optische Messfenster befinden. Diese Wahl verursacht aber beim Herstellungsverfahren einen Materialzusammenfluss, der die Erzielung der gewünschten Eigenschaften der optischen Messfenster beinträchtigt und ausserdem Probleme bei der Entlüftung während des Spritzgiessens verursacht.

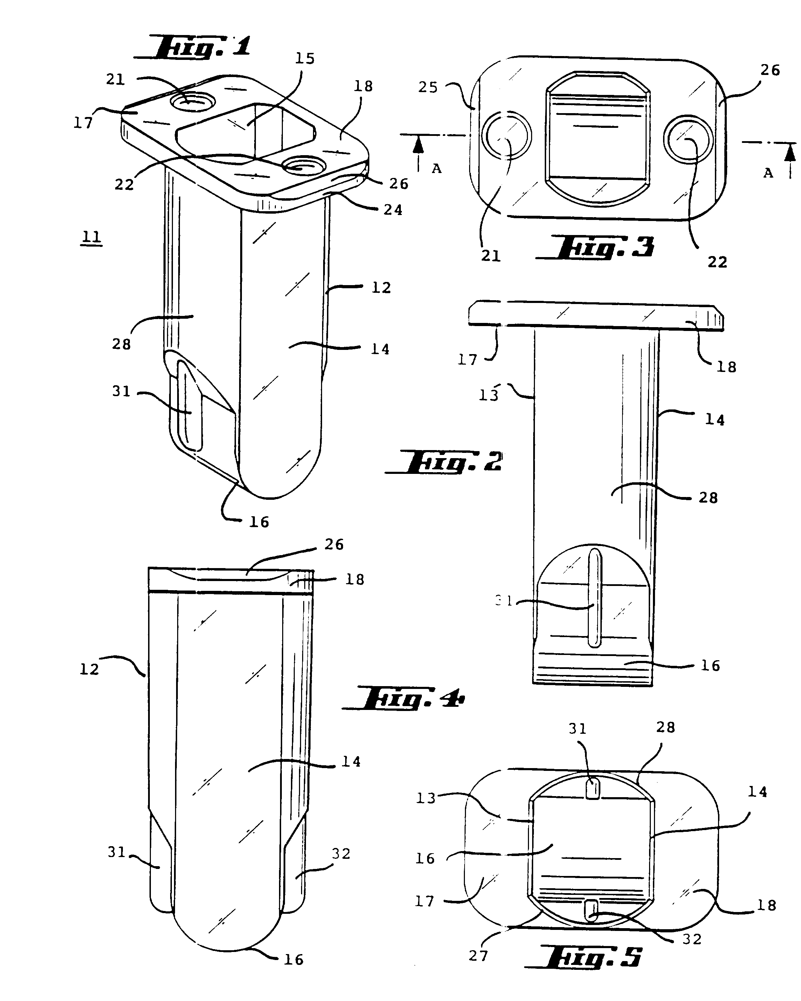

Diese Schwierigkeiten werden durch folgende Struktur der erfindungsgemässen Zelle. Wie aus den Figuren 1,2,4,5 und 7 ersichtlich, hat der rohrförmige Körper 12 zwei Seitenwände 27, 28, die sich zwischen den planparallelen Wänden 13, 14 erstrecken, welche Seitenwände einen oberen Teil und einen unteren Teil haben, wobei der untere Teil an den Boden 16 angrenzt, und wobei der untere Teil jeder Seitenwand 27, 28 einen äusseren Steg 31, 32 enthält, der sich in länglichen Richtung der Küvette zwischen dem oberen Teil der Seitenwand zu einem Punkt in der Nähe des Bodens 16 erstreckt. Das Vorhandensein dieser Stege als Teil der Küvette macht es möglich, der oben erwähnte, nachteilige Materialzusammenfluss während des Spritzgiessens zu vermeiden und dadurch die Erzielung der erforderlichen Eigenschaften der optischen Messfenster, die die Küvette sowohl zur Durchführung von spektralphotometrischen Messungen als auch Fluoreszenz-Polarisationsmessungen geeignet machen.

Zur Erleichterung der Entlüftung beim Spritzgiessen der Küvette haben die Stege 31, 32 je einen länglichen, sehr feinen Spalt, der als Einsatztrennung dient. Dieser Spalt ist in den beiliegenden Figuren nicht dargestellt.

Eine weiteres Merkmal der erfindungsgemässen Küvette ist, dass der Boden 16 die Form eines Halbzylinders hat. Diese Bodenform macht die Küvette zur Durchführung von Fluoreszenz-Polarisationsmessungen besonders geeignet, weil die dafür notwendigen Berechnungen durch den Umstand erheblich vereinfacht werden, dass der verwendete Lichtstrahl einen kreisförmigen Querschnitt hat und der Boden 16 zylindrisch ist.

## Patentansprüche

1. Küvette (11) zur Durchführung optischer Messungen in einem automatischen Analysengerät,
welche Küvette
a) ein aus einem lichtdurchlässigen Kunststoff in einem Stück geformten Teil ist,
b) einen länglichen Körper (12) hat, der an einem Ende (15) offen und am entgegengesetzten Ende durch einen Boden (16) geschlossen ist,
c) am offenen Ende (15) des Körpers zwei Zungen (17, 18) hat, die sich vom Rand des offenen Endes (15) nach aussen, senkrecht zur Längsachse der Küvette erstrecken, wobei jede Zunge eine Vertiefung (21, 22) besitzt, und wobei die Zungen (17, 18) und ihre Vertiefungen (21, 22) in bezug auf die Längsachse (Y-Y) der Küvette (11) zueinander symmetrisch sind,
dadurch gekennzeichnet, dass
d) sie einen rohrförmigen Körper (12) hat, der zwei planparallele Wände (13, 14) besitzt, die sich zwischen dem offenen Ende (15) und dem Boden (16) erstrecken,
e) die planparallelen Wände (13, 14) senkrecht zu den Zungen (17, 18) angeordnet sind,
f) der Boden (16) die Form eines Halbzylinders hat
g) der rohrförmige Körper (12) zwei Seitenwände (27, 28) hat, die sich zwischen den planparallelen Wänden (13, 14) erstrecken, welche Seitenwände einen oberen Teil und einen unteren Teil haben, wobei der untere Teil an den Boden (16) angrenzt, und wobei der untere, zentrale Teil jeder Seitenwand (27, 28) einen äusseren Steg (31, 32) enthält, der sich in Länglicher Richtung der Küvette zwischen dem oberen Teil der Seitenwand zu einem Punkt in der Nähe des Bodens (16) erstreckt, und
h) sie sowohl zur Durchführung von spektralphotometrischen Extinktionsmessungen als auch zur Durchführung von Fluoreszenz-Polarisationsmessungen geeignet ist.

2. Küvette gemäss Anspruch 1, dadurch gekennzeichnet, dass der Durchmesser jeder Vertiefung (21,22) annähernd die Hälfte der Abmessung der Zunge (17, 18) in der zu den planparallelen Wänden (13, 14) senkrechten Richtung beträgt.

3. Küvette gemäss Anspruch 1, dadurch gekennzeichnet, dass die Tiefe jeder Vertiefung (21,22) annähernd die Hälfte der Abmessung der Zunge (17, 18) in der zu den planparallelen Wänden (13, 14) parallelen Richtung beträgt.

4. Küvette gemäss Anspruch 1, dadurch gekennzeichnet, dass bei jeder Zunge (17, 18) der Bereich zwischen dem offenen Ende ihrer Vertiefung (21, 22) und dem äusseren Rand (23, 24) der Zunge eine ebene Fläche (25, 26) enthält, die mit einer zur Längsachse (Y-Y) der Küvette senkrechten Ebene einen Winkel von annähernd 45° bildet.

## Claims

1. A cuvette (11) for performing optical measurements in an automatic analyser, which cuvette
a) is a part moulded in one piece from a transparent plastic,
b) has an elongate body (12) open at one end (15) and closed at the opposite end by a base (16),
c) has at the open end (15) of the body two tongues (17,18) which extend outwardly from the edge of the open end (15) and perpendicularly to the longitudinal axis of the cuvette, each tongue having a recess (21, 22) and the tongues (17, 18) and their recesses (21, 22) being symmetrical relatively to one another with respect to the longitudinal axis (Y-Y) of the cuvette (11),
characterized in that
d) it has a tubular body (12) which has two plane-parallel walls (13, 14) extending between the open erd (15) and the base (16),
e) the plane-parallel walls (13, 14) are disposed perpendicularly to the tongues (17, 18),
f) the base (16) has the shape of a semi-cylinder,
g) the tubular body (12) has two side walls (27, 28) which extend between the plane-parallel walls (13, 14), which side walls have a top pa t and a bottom part, the bottom part adjoining the base (16) and the bottom central part of each side w ill (27, 28) containing an outer web (31, 32) which extends in the elongate direction of the cuvette between the top part of the side wall to a point near the base (16), and
h) it is suitable both for performing spectralphotometric extinction measurements and also for performing fluorescence polarization measurements.

2. A cuvette according to claim 1, characterized in that the diameter of each recess (21, 22) is approximately half the dimension of the tongue (17, 18) in the direction perpendicular to the plane-parallel walls (13, 14).

3. A cuvette according to claim 1, characterized in that the depth of each recess (21, 22) is approximately half the dimension of the tongue (17, 18) in the direction parallel to the plane-parallel walls (13, 14).

4. A cuvette according to claim 1, characterized in that the zone of each tongue (17, 18) situated between the open end of its recess (21, 22) and the outer edge (23, 24) of the tongue has a flat surface (25, 26) which forms an angle of approximately 45° with a plane perpendicular to the longitudinal axis (Y-Y) of the cuvette.

## Revendications

1. Cuvette (11) pour l'exécution de mesures optiques dans un appareil automatique d'analyse,
cette cuvette
a) étant un élément formé en une pièce de matière plastique transparente,
b) ayant un corps allongé (12) qui est ouvert à une extrémité (15) et fermé à l'extrémité opposée par un fond (16),
c) ayant à l'extrémité ouverte (15) du corps deux languettes (17, 18) qui s'étendent à partir du bord de l'extrémité ouverte (15) vers l'extérieur, perpendiculairement à l'axe longitudinal de la cuvette, chaque languette ccmportant une cavité (21, 22), les languettes (17, 18) et leurs cavités (21, 22) étant mutuellement symétriques en référence à l'axe longitudinal (Y, Y) de la cuvette (11),
caractérisée en ce que
d) elle comprend un corps tubulaire (12) ayant deux parois planes et parallèles (13, 14) qui sont disposées entre l'extrémité ouverte (15) et le fond (16),
e) les parois planes et parallèles (13, 14) sont disposées perpendiculairement aux languettes (17, 18),
f) le fond (16) a la forme d'un demi-cylindre,
g) le corps tubulaire (12) comprend deux parois latérales (27, 28) qui sont situées entre les parois planes et parallèles (13, 14), lesdites parois latérales ayant une partie supérieure et une partie inférieure, la partie inférieure avoisinant le fond (16) et la partie centrale inférieure de chaque paroi latérale (27, 28) comportant une nervure extérieure (31, 32) qui s'étend dans la direction de la longueur de la cuvette, entre la partie supérieure de la paroi latérale et un point situé à proximité du fond (16) et
h) elle convient aussi bien à l'exécution de mesures d'extinction en photométrie spectrale qu'à l'exécution de mesures de polarisation par fluorescence.

2. Cuvette selon la revendication 1, caractérisée en ce que le diamètre de chaque cavité (21, 22) correspond à peu près à la moitié de la dimension de la languette (17, 18) en direction perpendiculaire aux parois planes et parallèles (13, 14).

3. Cuvette selon la revendication 1, caractérisée en ce que la profondeur de chaque cavité (21, 22) correspond à peu près à la moitié de la dimension de la languette (17, 18) dans la direction parallèle aux parois planes et parallèles (13, 14).

4. Cuvette selon la revendication 1, caractérisée en ce que la zone de chaque languette (17, 18) qui est comprise entre l'extrémité ouverte de sa cavité (21, 22) et le bord extérieur (23, 24) de la languette comprend une surface plane (25, 26) qui inscrit un angle d'environ 45° avec un plan perpendiculaire à l'axe longitudinal (Y-Y) de la cuvette.
